# FASCICULE DE BREVET EUROPEEN

(11) **EP 4 630 321 B1**
(45) Date de publication et mention de la délivrance du brevet: **28.10.2026**
(21) Numéro de dépôt: 23836544.9
(22) Date de dépôt: 04.12.2023
(51) Int. Cl.: B64C 27/14, B64D 35/00, F02C 6/20, F02C 7/36, H02K 49/10

(54) **TURBOMACHINE COMPORTANT UN DISPOSITIF D'ACCOUPLEMENT MAGNÉTIQUE D'IMMOBILISATION**
TURBINENTRIEBWERK UMFASSEND EINE MAGNETISCHE FESTSTELLVORRICHTUNG
TURBINE ENGINE COMPRISING A MAGNETIC IMMOBILISING APPARATUS

(30) Priorité: 05.12.2022 FR 2212737
(43) Date de publication de la demande: 15.10.2025
(73) Titulaire: Safran Helicopter Engines, 64510 Bordes (FR)
(72) Inventeur: DOUILLARD, Stéphane Albert André, 77550 MOISSY-CRAMAYEL (FR); BEDDOK, Stéphane Meyer, 77550 MOISSY-CRAMAYEL (FR); AUDUBERTEAU, Alexandre, 77550 MOISSY-CRAMAYEL (FR); CLADIERE, Mathieu Pierre, 77550 MOISSY-CRAMAYEL (FR)
(74) Mandataire: Gevers & Orès
(86) Numéro de dépôt international: PCT/FR2023/051914
(87) Numéro de publication internationale: WO 2024/121495

(56) Documents cités:
- CN-U- 216 401 749
- FR-A1- 3 109 766
- US-A- 5 282 719
- US-A- 5 405 104
- US-A1- 2014 377 079
- US-A1- 2017 225 779
- US-A1- 2017 260 872
- US-A1- 2022 243 664
- US-B1- 9 677 564

## Description

### Domaine technique de l'invention

L'invention se rapporte à une turbomachine pour un aéronef comportant :
- un élément de structure ;
- un élément tournant à pales ou à aubes monté rotatif dans l'élément de structure destiné à générer une poussée lors de sa rotation ;
- des moyens de propulsion qui entraînent l'élément tournant en rotation ;
- des moyens de freinage de la rotation de l'élément tournant formés par un moteur électrique de freinage ;

### Arrière-plan technique

L'état de la technique comprend notamment les documents US 2017/260872 A1 et FR 3 109 766 A1.

Les turbomachines aéronautiques entrainent des éléments tournants permettant de générer de la poussée. Selon le type de turbomachine considéré, l'élément tournant peut présenter différentes configurations. Selon des exemples non limitatifs, l'élément tournant est formé par un rotor à pales pour un hélicoptère, ou il est formé par une roue de compresseur pour un turboréacteur, ou encore il est formé par une hélice d'un turbopropulseur, etc.

Lors de certaines phases spécifiques de l'utilisation des aéronefs, ces éléments tournants peuvent nécessiter d'être ralentis et/ou arrêtés et/ou maintenus à l'arrêt.

Selon un premier exemple d'une telle phase spécifique d'utilisation, ce besoin peut apparaitre notamment pour faciliter la montée ou la descente des passagers en maintenant les moteurs en fonctionnement.

Selon un autre exemple d'une telle phase spécifique d'utilisation, la turbomachine peut être maintenue en fonctionnement pour prélever de la puissance électrique ou pneumatique sur la turbomachine sans entrainer le rotor.

Selon encore un autre exemple d'une telle phase spécifique d'utilisation, lorsque l'aéronef est posé sur le tarmac, moteur à l'arrêt, le vent risque d'entraîner en rotation les pales du rotor. On cherche donc à immobiliser en rotation des pales du rotor et de la turbine de puissance du moteur.

Les solutions techniques connues pour effectuer la fonction de freinage et la fonction d'immobilisation des éléments tournant générant de la poussée sont les freins à disque à actionnement hydraulique ou électrique montés sur la ligne d'arbre entre le moteur de la turbomachine et l'élément tournant à freiner.

Les systèmes classiques de freins à disque fonctionnent par la friction de pièces. Or les pièces de friction s'usent rapidement au fur et à mesure de leur utilisation. Elles doivent donc être changées fréquemment. Cela engendre donc des coûts d'achat des pièces ainsi que des coûts d'immobilisation et de maintenance régulière de l'aéronef.

### Résumé de l'invention

L'invention concerne une turbomachine pour un aéronef selon la revendication 1.

Selon un autre aspect de l'invention, dans l'état actif, les premiers éléments magnétiques sont séparés des deuxièmes éléments magnétiques par un entrefer.

Selon un autre aspect de l'invention, les premiers éléments magnétiques du rotor sont formés par des aimants permanents.

Selon un autre aspect de l'invention, les deuxièmes éléments magnétiques du stator sont formés par des aimants permanents.

Selon un autre aspect de l'invention, le stator est monté coulissant par rapport au rotor selon la direction de l'axe de rotation entre :
- une position écartée, correspondant à son état inactif, dans laquelle les premiers éléments magnétiques sont suffisamment écartés des deuxièmes éléments magnétiques pour que couple résistant d'immobilisation soit sensiblement nul ; et
- une position rapprochée, correspondant à son état actif, dans laquelle les premiers éléments magnétiques sont suffisamment proches pour que le couple résistant d'immobilisation immobilise l'élément tournant par rapport à l'élément de structure.

Selon un autre aspect de l'invention, les premiers éléments magnétiques sont agencés radialement en vis-à-vis des deuxièmes éléments magnétiques lorsque le dispositif d'accouplement magnétique est dans son état actif.

Selon un autre aspect de l'invention, l'un parmi le stator ou le rotor est configuré pour être reçu concentriquement dans l'autre parmi le stator ou le rotor dans l'état actif du dispositif d'accouplement magnétique avec réservation d'un entrefer radial, les premiers éléments magnétiques et les deuxièmes éléments magnétiques étant chacun agencés en couronne autour de l'axe de rotation, avec alternance de leur polarité.

Selon un autre aspect de l'invention, les premiers éléments magnétiques sont agencés axialement en vis-à-vis des deuxièmes éléments magnétiques lorsque le dispositif d'accouplement magnétique est dans son état actif.

Selon un autre aspect de l'invention, le rotor et le stator présentent la forme de flasques se faisant face axialement, les premiers éléments magnétiques et les deuxièmes éléments magnétiques étant chacun agencés régulièrement autour de l'axe de rotation dans la face faisant face à l'autre flasque.

Selon un autre aspect de l'invention, le moteur électrique de freinage forme les moyens de propulsion.

### Brève description des figures

D'autres caractéristiques et avantages de l'invention apparaitront au cours de la lecture de la description détaillée qui va suivre pour la compréhension de laquelle on se reportera aux dessins annexés.
La figure 1 est une vue en coupe axiale qui représente schématiquement un turbopropulseur réalisé selon les enseignements de l'invention.
La figure 2 est une vue en coupe axiale qui représente un boîtier de transmission du turbopropulseur de la figure 1 qui comporte un dispositif d'accouplement magnétique pour immobiliser une hélice du turbopropulseur, le dispositif d'accouplement magnétique étant dans un état inactif.
La figure 3 est une vue similaire à celle de la figure 2 dans laquelle un moteur électrique de freinage fournit un couple de freinage à l'hélice.
La figure 4 est une vue similaire à celle de la figure 2 dans laquelle le dispositif d'accouplement magnétique est dans un état actif, des moyens de propulsion du turbopropulseur étant à l'arrêt.
La figure 5 est une vue similaire à celle de la figure 2 dans laquelle le dispositif d'accouplement magnétique est dans un état actif, des moyens de propulsion du turbopropulseur étant en fonctionnement.
La figure 6 est une vue en coupe axiale qui représente le dispositif d'accouplement magnétique de la figure 2 réalisé selon un premier mode de réalisation de l'invention, le dispositif d'accouplement magnétique étant dans son état actif.
La figure 7 est une vue en coupe transversale qui représente le dispositif d'accouplement magnétique de la figure 6 dans son état actif.
La figure 8 est une vue en coupe axiale qui représente le dispositif d'accouplement magnétique de la figure 2 réalisé selon un deuxième mode de réalisation de l'invention, le dispositif d'accouplement magnétique étant dans son état actif.
La figure 9 est une vue de face qui représente un rotor du dispositif d'accouplement magnétique de la figure 8.

### Description détaillée de l'invention

Dans la suite de la description, des éléments présentant une structure identique ou des fonctions analogues seront désignés par une même référence.

Dans la suite de la description, on adoptera à titre non limitatif une orientation axiale dirigée d'avant en arrière et parallèle à l'axe « E » de rotation du rotor d'un dispositif d'accouplement magnétique.

On utilisera une orientation radiale qui est dirigée orthogonalement à la direction axiale et qui est dirigée depuis l'intérieur à proximité d'un axe de rotation déterminé vers l'extérieur. On utilisera également une direction circonférentielle qui est dirigée orthogonalement à une direction radiale et à la direction longitudinale.

Dans la suite de la description, chaque élément magnétique comportera deux pôles magnétiques opposés qui seront désignés par la lettre « N » et « S » sur les figures.

L'invention concerne une turbomachine 10 pour un aéronef.

La turbomachine 10 peut équiper un aéronef à décollage et atterrissage vertical, tel qu'un hélicoptère. A cet égard, l'aéronef comporte une turbomachine, dite "de sustentation", qui est destinée à provoquer une poussée verticale de sustentation de l'aéronef.

La turbomachine 10 peut aussi être une turbomachine de propulsion, qui est destinée à provoquer une poussée longitudinale pour permettre le déplacement de l'aéronef vers l'avant.

De manière générale, une telle turbomachine 10 comporte un élément 12 de structure qui est monté sur l'aéronef. Elle comporte aussi un élément 14 tournant à pale ou à aubes monté rotatif autour d'un axe « A » dans l'élément 12 de structure. L'élément 14 rotatif comporte généralement un moyeu 16 duquel s'étendent radialement une pluralité de pales 18 ou d'aubes. Les pales 18 ou les aubes sont réparties régulièrement autour du moyeu 16 avec un pas angulaire déterminé.

Plus particulièrement, l'élément 14 tournant comporte un arbre 20 de sortie qui d'axe « A » est monté rotatif dans l'élément 12 de structure par l'intermédiaire de paliers de guidage.

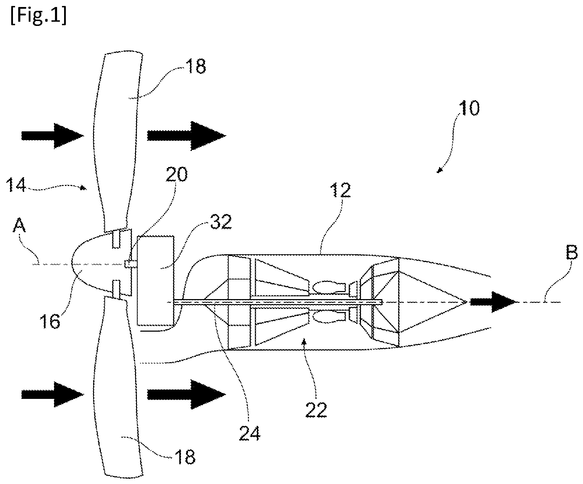

On a représenté à la figure 1 un exemple non limitatif d'une turbomachine 10 formée par un turbopropulseur. L'élément 14 tournant est formé par une hélice munie de pales 18 s'étendant depuis un moyeu 16 ou encore par un rotor d'hélicoptère. L'élément 12 de structure peut alors être formé par une nacelle ou par la structure de l'aéronef lui-même.

En variante non représentée de l'invention, la turbomachine peut aussi être formée par un turboréacteur. Dans ce cas, l'élément 14 tournant est formé par une soufflante, carénée ou non carénée, et l'élément 12 de structure est formé par une manche.

La turbomachine 10 comporte en outre des moyens 22 de propulsion qui entraînent l'élément 14 tournant en rotation. Les moyens 22 de propulsion entraînent en rotation un arbre 24 d'entrée d'axe « B » qui est destiné à être lié en rotation avec l'arbre 20 de sortie pour entraîner l'élément 14 tournant en rotation.

Les moyens 22 de propulsion peuvent être formés par un moteur thermique par une turbine ou encore par un moteur électrique.

Dans l'exemple représenté à la figure 1, les moyens 22 de propulsion sont formés par au moins un étage de turbine à gaz.

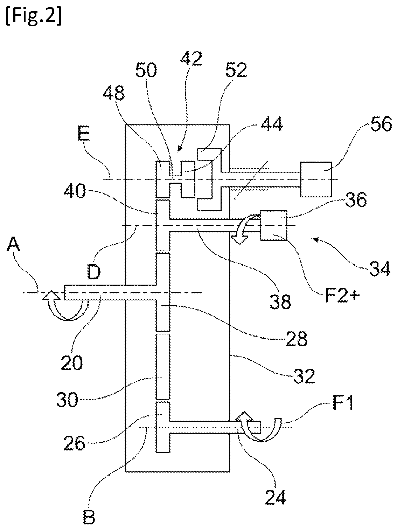

Dans le mode de réalisation représenté aux figures 2 à 5, le couple de rotation de l'arbre 24 d'entrée est transmis à l'arbre 20 de sortie par l'intermédiaire d'un train d'engrenages.

Dans l'exemple de réalisation non limitatif représenté à la figure 2, l'arbre 24 d'entrée est équipé d'un pignon 26 d'entrée solidaire en rotation avec l'arbre 24 d'entrée. L'arbre 20 de sortie est équipé d'un pignon 28 de sortie solidaire en rotation avec l'arbre 20 de sortie. Le train d'engrenages comporte ici un pignon 30 intermédiaire qui est engrené avec le pignon 26 d'entrée, d'une part, et avec le pignon 28 de sortie d'autre part. Le pignon 30 intermédiaire est monté rotatif autour d'un axe « C » L'arbre 24 d'entrée entraîne ainsi le pignon 26 d'entrée en rotation, qui entraîne lui-même par engrènement le pignon 30 intermédiaire. Le pignon 30 intermédiaire entraîne à son tour le pignon 28 de sortie, et ainsi l'arbre 20 de sortie, en rotation.

Le train d'engrenages est ici agencé dans un boîtier 32 de transmission.

La turbomachine 10 comporte en outre des moyens 34 de freinage pour ralentir, voire arrêter, la rotation de l'élément 14 tournant par rapport à l'élément 12 de structure. En effet, lorsque les moyens 22 de propulsion sont arrêtés, l'élément 14 tournant est susceptible de poursuivre sa rotation sous l'effet de l'inertie. Les moyens 34 de freinage permettent ainsi de réduire le temps nécessaire à l'arrêt total de la rotation de l'élément 14 tournant.

Les moyens 34 de freinage sont formés par un moteur 36 électrique, appelé par la suite « moteur 36 électrique de freinage ». Il peut s'agir d'un moteur électrique à courant continu ou d'un moteur à courant alternatif de type synchrone, asynchrone ou à reluctance variable. Un tel moteur 36 électrique de freinage présente l'avantage de pouvoir ralentir l'élément 14 tournant en opposant à sa rotation un couple de freinage.

De préférence, les moyens 34 de freinage ne sont pas formés par un moteur synchrone pas à pas, aussi connu sous sa dénomination anglaise de "stepper motor". Il n'est en effet pas toujours nécessaire de bénéficier des avantages d'un tel moteur électrique qui est très onéreux.

En variante, lorsqu'il est nécessaire d'arrêter l'élément 14 tournant dans une position angulaire déterminée, les moyens 34 de freinage sont formés par un moteur synchrone pas à pas.

Le moteur 36 électrique de freinage est distinct des moyens 22 de propulsion.

Dans ces deux cas, le moteur 36 électrique de freinage est par exemple agencé en parallèle avec le moteur de propulsion. Le moteur 36 électrique de freinage entraîne en rotation un arbre 38 de freinage d'axe « D » qui est lié en rotation avec l'arbre 20 de sortie par l'intermédiaire d'un train d'engrenages.

Dans l'exemple de réalisation non limitatif représenté aux figures, l'arbre 38 de freinage est équipé d'un pignon 40 de freinage solidaire en rotation avec l'arbre 38 de freinage. Le pignon 40 de freinage est ici directement engrené avec le pignon 28 de sortie. L'arbre 24 d'entrée de freinage transmet ainsi un couple au pignon 28 de sortie. Le pignon 40 de freinage est ici agencé dans le boîtier 32 de transmission.

Dans cette configuration, le moteur 36 électrique de freinage peut être utilisé pour appliquer un couple de freinage qui s'oppose à la rotation de l'élément 14 tournant. Dans ce cas, le moteur 36 électrique de freinage permet de ralentir, voire d'arrêter, la rotation de l'élément 14 tournant.

Le moteur 36 électrique de freinage peut aussi être utilisé pour fournir un couple d'entraînement en rotation de l'élément 14 tournant pour assister et/ou remplacer le moteur de propulsion.

Selon une autre variante de réalisation, le moteur 36 électrique de freinage forme aussi les moyens 22 de propulsion. Ainsi, un même moteur électrique remplit les deux fonctions de propulsion et de freinage.

En tous les cas, la turbomachine 10 comporte avantageusement des moyens commandés d'immobilisation en rotation de l'élément 14 tournant par rapport à l'élément 12 de structure. Ceci permet d'empêcher la rotation de l'élément 14 tournant lorsque cela est nécessaire, comme cela a été mentionné en préambule.

L'invention propose des moyens d'immobilisation formés par un dispositif 42 d'accouplement magnétique afin d'immobiliser l'élément 14 tournant sans avoir besoin d'alimenter électriquement les moteurs 36 électriques de freinage et/ou de propulsion. En effet, outre l'énergie que cela implique de consommer pour immobiliser l'élément 14 tournant, l'alimentation continue d'un moteur électrique sur la durée risque de provoquer une surchauffe de certains composants électriques ou électroniques, provoquant ainsi une usure prématurée de ces composants.

Un tel dispositif 42 d'accouplement magnétique est distinct du moteur 36 électrique de freinage et il est distinct du moteur de propulsion lorsque celuici est formé par un moteur électrique.

Un tel dispositif 42 d'accouplement magnétique comporte un rotor 44 qui est monté en rotation autour d'un axe « E » de rotation. Le rotor 44 est lié en rotation avec l'élément 14 tournant. Le rotor 44 comporte des premiers éléments magnétiques 46.

Le rotor 44 est lié en rotation avec l'arbre 20 de sortie par l'intermédiaire d'un train d'engrenages. Le train d'engrenage présente un rapport « r » de transmission déterminé.

Dans l'exemple non limitatif représenté aux figures, le rotor 44 est solidaire en rotation avec un pignon 48 d'immobilisation par l'intermédiaire d'un arbre 50 d'immobilisation coaxial à l'axe « E » de rotation. Le pignon 48 d'immobilisation est directement engrené avec le pignon 40 de freinage. Le rotor 44 immobilise ainsi le pignon 28 de sortie par l'intermédiaire du pignon 40 de freinage. Le rotor 44 et le pignon 48 d'immobilisation sont ici agencés dans le boîtier 32 de transmission.

Le dispositif 42 d'accouplement magnétique comporte aussi un stator 52 qui est monté fixe en rotation autour dudit axe « E » de rotation par rapport à l'élément 12 de structure. Le stator 52 comporte des deuxièmes éléments magnétiques 54.

De manière non limitative, le stator 52 est ici agencé dans le boîtier 32 de transmission.

Le dispositif 42 d'accouplement magnétique est commandé entre un état inactif dans lequel le rotor 44 est libre de tourner par rapport au stator 52 et un état actif dans lequel le rotor 44 est immobilisé en rotation par rapport au stator 52 par un couple « Ci » résistant d'immobilisation produit par interaction magnétique sans contact entre les premiers éléments magnétiques 46 et les deuxièmes éléments magnétiques 54.

Un tel couple « Ci » résistant d'immobilisation est défini comme un couple qui s'oppose à la mise en rotation du rotor 44 dans les deux sens autour de son axe « E » de rotation.

Plus particulièrement, l'interaction magnétique fait intervenir des forces d'attraction magnétique qui attirent un premier élément magnétique 46 et un deuxième élément magnétique 54 associé, ainsi que des forces de répulsion magnétique, comme cela sera expliqué par la suite.

Le rotor 44 demeure immobilisé tant qu'un couple supérieur à un couple « Cg » de glissement n'est pas appliqué au rotor 44 dans un sens ou dans l'autre. Lorsqu'un couple supérieur ou égal au couple « Cg » de glissement est appliqué au rotor 44, ce couple surmonte le couple « Ci » résistant d'immobilisation, provoquant ainsi la rotation du rotor 44 par rapport au stator 52. Ce couple « Cg » de glissement dépend notamment des propriétés des éléments magnétiques utilisés, notamment de l'intensité du champ magnétique qu'ils émettent.

L'utilisation d'un train d'engrenages pour lier le rotor 44 en rotation à l'arbre 20 de sortie permet de démultiplier le couple « Cg » de glissement en configurant le train d'engrenages avec un rapport « r » de transmission déterminé.

Par exemple, on considère un dispositif 42 d'accouplement magnétique configuré avec un couple « Cg » de glissement de 40 N.m. Lorsque le rapport « r » de transmission est de 10 entre le pignon 28 de sortie considéré comme une roue menante et le pignon 48 d'immobilisation considéré comme une roue menée, le couple appliqué par l'élément 14 tournant au rotor 44 est divisé par 10. Ainsi, si un couple de rotation de 100 N.m est appliqué à l'élément 14 tournant, par exemple par le vent, le rotor 44 sera soumis seulement à un couple d'entraînement de 10 N.m qui est inférieur au couple « Cg » de glissement, tandis qu'en l'absence de ce rapport « r » de transmission, ce couple d'entraînement dépasserait le couple « Cg » de glissement.

Selon une variante, le rotor 44 est directement porté par l'arbre 20 de sortie. Cependant, cette configuration ne permet pas de bénéficier du rapport « r » de transmission permettant de démultiplier le couple « Cg » de glissement comme c'est le cas lorsque le rotor 44 est lié à l'arbre 20 de sortie par l'intermédiaire d'un train d'engrenages.

Selon une autre variante, le rotor 44 est directement porté par l'arbre 24 d'entrée. Cependant, cette configuration ne permet pas de bénéficier du rapport « r » de transmission permettant de démultiplier le couple « Cg » de glissement comme c'est le cas lorsque le rotor 44 est lié à l'arbre 20 de sortie par l'intermédiaire d'un train d'engrenages.

De manière non limitative, l'arbre 24 d'entrée, l'arbre 38 de freinage, l'arbre 20 de sortie et l'arbre 50 d'immobilisation sont ici agencés parallèlement les uns aux autres.

Il s'agit ici d'un dispositif 42 d'accouplement magnétique synchrone.

De préférence, les premiers éléments magnétiques 46 du rotor 44 sont formés par des aimants permanents. De même, les deuxièmes éléments magnétiques 54 du stator 52 sont formés par des aimants permanents. Chaque élément magnétique 46, 54 peut être réalisé par un aimant ou par l'assemblage de plusieurs aimants.

Cette configuration permet d'obtenir un dispositif 42 d'accouplement magnétique qui ne consomme pas d'énergie lorsqu'il immobilise l'élément 14 tournant. En outre, un tel dispositif 42 d'accouplement magnétique ne subit sensiblement aucune usure.

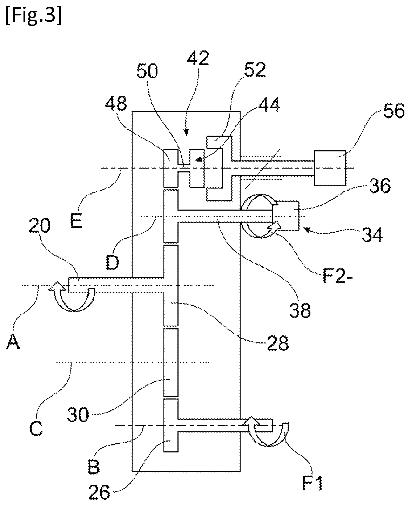

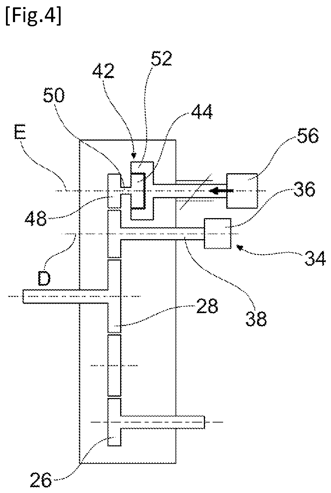

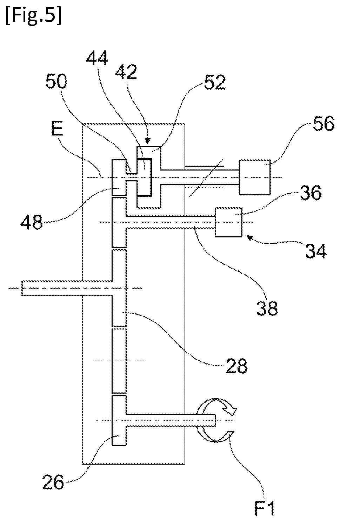

Les aimants permanents émettant un champ magnétique permanent, pour permettre de commander le dispositif 42 d'accouplement magnétique entre son état actif et son état inactif, le stator 52 est monté coulissant par rapport au rotor 44 selon la direction de l'axe « E » de rotation entre :
- une position écartée, représentée aux figures 2 et 3, correspondant à son état inactif, dans laquelle les premiers éléments magnétiques 46 sont suffisamment écartés des deuxièmes éléments magnétiques 54 pour que le couple « Ci » résistant d'immobilisation soit sensiblement nul ; et
- une position rapprochée, représentée aux figures 4 et 5, correspondant à son état actif, dans laquelle les premiers éléments magnétiques 46 sont suffisamment proches des deuxièmes éléments magnétiques 54 pour que le couple « Ci » résistant d'immobilisation immobilise l'élément 14 tournant par rapport à l'élément 12 de structure.

Dans le mode de réalisation représenté aux figures, le stator 52 est monté coulissant axialement par rapport à l'élément 12 de structure, tandis que le rotor 44 demeure fixe axialement.

Le coulissement est par exemple commandé au moyen d'un actionneur 56 mécanique ou électrique.

En variante, c'est le rotor 44 qui est monté coulissant axialement par rapport à l'élément 12 de structure, tandis que le stator 52 demeure fixe axialement.

Dans l'état actif, les premiers éléments magnétiques 46 sont séparés des deuxièmes éléments magnétiques 54 par un entrefer « e ». Dans cette position, le rotor 44 pourrait tourner librement par rapport au stator 52 s'il n'en était pas empêché par le couple « Ci » résistant d'immobilisation.

En variante non représentée, les premiers éléments magnétiques 46 et/ou les deuxièmes éléments magnétiques 54 sont formés par des électroaimants. Dans ce cas, le stator 52 peut être fixe axialement par rapport au stator 52, l'état du dispositif 42 d'accouplement magnétique étant commandé par l'alimentation électrique des électroaimants.

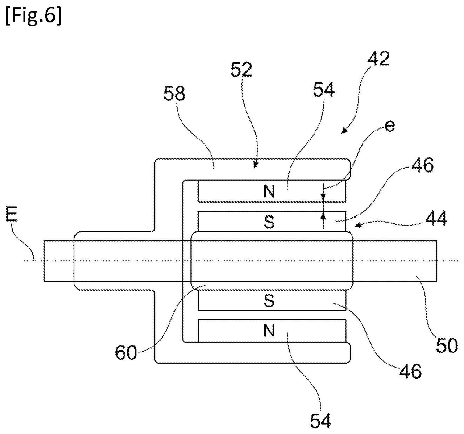

Selon un premier mode de réalisation de l'invention représenté aux figures 2 à 7, le dispositif 42 d'accouplement magnétique est dit « à flux radial ». Dans ce cas, lorsque le dispositif 42 d'accouplement magnétique est dans son état actif, les premiers éléments magnétiques 46 du rotor 44 sont agencés radialement en vis-à-vis des deuxièmes éléments magnétiques 54, par rapport à l'axe « E » de rotation, de manière que la force d'attraction magnétique mutuelle exercée par chaque premier élément magnétique 46 sur le deuxième élément magnétique 54 radialement en vis-à-vis soit orientée radialement, comme représenté à la figure 6.

A cet effet, le stator 52 présente ici une culasse 58 de forme tubulaire, dite culasse 58 externe. Le rotor 44 présente une culasse 60 de forme cylindrique, dite culasse 60 interne. Chaque culasse 58, 60 est par exemple réalisée en un matériau ferromagnétique.

En position rapprochée, comme représenté aux figures 2, 3, 6 et 7, la culasse 60 interne est destinée à être reçue concentriquement à l'intérieur de la culasse 58 externe avec un jeu radial de manière qu'aucun obstacle mécanique n'empêche la rotation du rotor 44 par rapport au stator 52 autour de l'axe « E » de rotation.

En position écartée, comme représentée aux figures 2 et 3, la culasse 58 externe est écartée axialement de la culasse 60 interne de manière que la culasse 60 interne ne soit plus à l'intérieur de la culasse 58 externe.

En variante non représentée, et par inversion mécanique, le stator 52 comporte la culasse 60 interne, tandis que le rotor 44 comporte la culasse 58 externe.

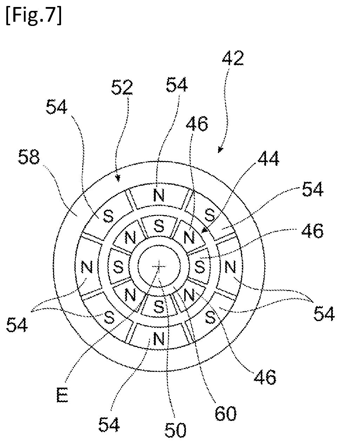

Comme représenté à la figure 7, Les premiers éléments magnétiques 46 sont agencés régulièrement autour de l'axe « E » de rotation, en couronne dans une face cylindrique interne de la culasse 58 externe. Chaque premier élément magnétique 46 est agencé de manière qu'un de ses pôles, dit pôle actif, soit orienté radialement vers l'intérieur. Deux pôles actifs adjacents présentent des polarités opposées, comme indiqué par les références « N » et « S ». Ainsi, les premiers éléments magnétiques 46 sont agencés en couronne autour de l'axe « E » de rotation avec alternance de leur polarité.

De même, les deuxièmes éléments magnétiques 54 sont agencés régulièrement autour de l'axe « E » de rotation en couronne dans une face cylindrique externe de la culasse 60 interne. Chaque deuxième élément magnétique 54 est agencé de manière qu'un de ses pôles, dit pôle actif, soit orienté radialement vers l'extérieur. Deux pôles actifs adjacents présentent des polarités opposées. Ainsi, les deuxièmes éléments magnétiques 54 sont agencés en couronne autour de l'axe « E » de rotation avec alternance de leur polarité.

En position rapprochée, la couronne de premiers éléments magnétiques 46 est séparée de la couronne de deuxièmes éléments magnétiques 54 par un entrefer « e » radial représenté à la figure 6.

Il y a autant de premiers éléments magnétiques 46 que de deuxièmes éléments magnétiques 54. Ainsi, lorsque le stator 52 occupe sa position rapprochée par rapport au rotor 44, le pôle actif de chaque premier élément magnétique 46 est associé avec un pôle actif de polarité opposée d'un deuxième élément magnétique 54 associé. Ainsi, la force d'attraction mutuelle entre deux éléments magnétiques en vis-à-vis présente une direction radiale.

En outre, du fait de l'alternance de polarités de chaque pôle actif sur les deux couronnes, un pôle actif d'une couronne qui est attiré par un pôle actif de l'autre couronne est automatiquement repoussé par les pôles actifs adjacents de polarités opposée. Cette combinaison de forces d'attraction et de répulsion produit un couple « Ci » résistant d'immobilisation permettant ainsi d'empêcher la rotation du rotor 44 par rapport au stator 52.

Un tel dispositif 42 d'accouplement magnétique à flux radial présente par exemple un couple « Cg » de glissement compris entre 40 et 100 N.m, par exemple 40 N.m ou 95 N.m.

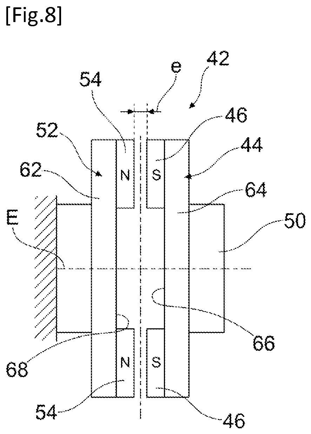

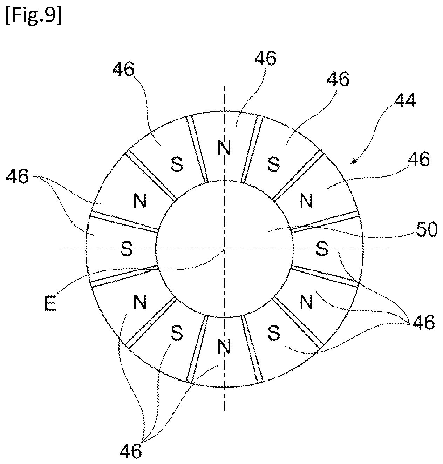

Selon un deuxième mode de réalisation de l'invention représenté aux figures 8 et 9, le dispositif 42 d'accouplement magnétique est dit « à flux axial ». Dans ce cas, lorsque le dispositif 42 d'accouplement magnétique est dans son état actif, comme représenté à la figure 8, les premiers éléments magnétiques 46 du rotor 44 sont agencés axialement en vis-à-vis des deuxièmes éléments magnétiques 54 de manière que la force d'attraction magnétique mutuelle exercée par chaque élément magnétique sur l'élément magnétique radialement en vis-à-vis soit orientée axialement.

A cet effet, le stator 52 présente ici une culasse 62 en forme de flasque qui s'étend radialement autour de l'axe « E » de rotation. Le rotor 44 présente une culasse 64 en forme de flasque qui s'étend radialement autour de l'axe « E » de rotation. Ainsi, la culasse 64 de rotor 44 présente une face 66 radiale libre agencée en vis-à-vis d'une face 68 radiale libre de la culasse 62 de stator 52. Chaque culasse 62, 64 est par exemple réalisée en un matériau ferromagnétique.

En position rapprochée, la face 66 libre de la culasse 64 du rotor 44 est destinée à être agencée axialement en vis-à-vis de la face 68 libre de la culasse 62 du stator 52 avec un jeu axial de manière qu'aucun obstacle mécanique n'empêche la rotation du rotor 44 par rapport au stator 52 autour de l'axe « E » de rotation.

En position écartée, la face 66 de la culasse 64 du rotor 44 est écartée axialement de la face 68 de la culasse 62 du stator 52.

Comme représenté à la figure 9, les premiers éléments magnétiques 46 sont agencés régulièrement autour de l'axe « E » de rotation, en couronne dans la face 66 libre de la culasse 64 de rotor 44. Chaque premier élément magnétique 46 est agencé de manière qu'un de ses pôles, dit pôle actif, soit orienté axialement vers la face 68 libre de la culasse 62 de stator 52. Deux pôles actifs adjacents présentent des polarités opposées, comme indiqué par les références « N » et « S ». Ainsi, les premiers éléments magnétiques 46 sont agencés en couronne autour de l'axe « E » de rotation avec alternance de leur polarité.

De même, les deuxièmes éléments magnétiques 54 sont agencés régulièrement autour de l'axe « E » de rotation en couronne dans la face 68 libre de la culasse 62 de stator 52. Chaque deuxième élément magnétique 54 est agencé de manière qu'un de ses pôles, dit pôle actif, soit orienté axialement vers la face 66 libre de la culasse 64 de rotor 44. Deux pôles actifs adjacents présentent des polarités opposées. Ainsi, les deuxièmes éléments magnétiques 54 sont agencés en couronne autour de l'axe « E » de rotation avec alternance de leur polarité.

En position rapprochée, la couronne de premiers éléments magnétiques 46 est séparée de la couronne de deuxièmes éléments magnétiques 54 par un entrefer « e » axial, comme représenté à la figure 8.

Il y a autant de premiers éléments magnétiques 46 que de deuxièmes éléments magnétiques 54. Ainsi, lorsque le stator 52 occupe sa position rapprochée par rapport au rotor 44, le pôle actif de chaque premier élément magnétique 46 est associé avec un pôle actif de polarité opposée d'un deuxième élément magnétique 54 associé. Ainsi, la force d'attraction mutuelle entre deux éléments magnétiques en vis-à-vis présente une direction axiale.

En outre, du fait de l'alternance de polarités de chaque pôle actif sur les deux couronnes, un pôle actif d'une couronne qui est attiré par un pôle actif de l'autre couronne est automatiquement repoussé par les pôles actifs adjacents de polarités opposée. Cette combinaison de forces d'attraction et de répulsion produit un couple « Ci » résistant d'immobilisation permettant ainsi d'empêcher la rotation du rotor 44 par rapport au stator 52 dans les deux sens.

Un tel dispositif 42 d'accouplement magnétique à flux axial présente par exemple un couple « Cg » de glissement compris entre 20 et 100 N.m, par exemple 20 N.m.

Quel que soit le mode de réalisation du dispositif 42 d'accouplement magnétique synchrone, chaque élément magnétique 46, 54 est conçu pour que l'intensité de son champ magnétique soit assez grande pour empêcher l'élément 14 tournant de tourner, que ce soit sous l'effet du vent ou de tout autre force.

Outre le fait d'un dispositif 42 d'accouplement magnétique permet d'économiser de l'énergie et de réduire les opérations de maintenance, le fait que l'immobilisation soit réalisée sans contact physique permet aussi d'éviter que les moyens d'immobilisation ne soient endommagés lorsqu'un couple de rotation surpassant le couple « Cg » de glissement du dispositif 42 d'accouplement magnétique est appliqué à l'élément 14 tournant. Dans ce cas, le rotor 44 sera entraîné en rotation par rapport au stator 52 sans conséquences pour le dispositif 42 d'accouplement magnétique.

De plus, un tel dispositif 42 d'accouplement magnétique est particulièrement compact et léger.

On décrit à présent le fonctionnement de la turbomachine 10 en référence à un dispositif 42 d'accouplement magnétique à flux radial. Cette description est aussi applicable à un dispositif 42 d'accouplement magnétique à flux axial.

Comme représenté à la figure 2, lorsqu'il est nécessaire d'entraîner l'élément 14 tournant en rotation, notamment pendant les phases de vol, les moyens d'immobilisation par dispositif 42 d'accouplement magnétique sont désactivés. Dans l'exemple représenté aux figures, le stator 52 occupe sa position écartée. Ainsi, le rotor 44 est libre en rotation sans que les éléments magnétiques 46, 54 ne s'opposent sensiblement à sa rotation.

Les moyens 22 de propulsion entrainent le rotor 44 générant la poussée via le boîtier 32 de transmission, comme indiqué par la flèche « F1 ».

Lorsque les moyens 34 de freinage sont formés par un moteur 36 électrique de freinage distinct des moyens 22 de propulsion, soit le moteur 36 électrique de freinage peut être utilisé pour fournir un couple de rotation afin d'assister les moyens 22 de propulsion, comme indiqué ici par la flèche « F2+ », soit le moteur 36 électrique de freinage est désactivé. En tous les cas, le moteur 36 électrique de freinage ne fournit pas un couple de freinage qui s'oppose à la rotation de l'élément 14 tournant.

Comme représenté à la figure 3, lorsqu'il est nécessaire de ralentir la vitesse de rotation de l'élément 14 tournant, par exemple lorsque l'aéronef est posé au sol pour débarquer rapidement des passagers, le moteur 36 électrique de freinage est activé pour fournir un couple de freinage à l'encontre de la rotation de l'élément 14 tournant afin de ralentir l'élément 14 tournant, comme indiqué par la figure « F2- ».

Comme représenté à la figure 4, lorsque la rotation de l'élément 14 tournant a été arrêtée, les moyens d'immobilisation par dispositif 42 d'accouplement magnétique sont activés. Le stator 52 est alors commandé en coulissement axial depuis sa position écartée jusqu'à sa position rapprochée. Un couple « Ci » résistant d'immobilisation est alors appliqué au rotor 44, ce qui permet l'immobilisation de l'élément 14 tournant tant que l'élément 14 tournant n'est pas soumis à un couple d'entraînement supérieur ou égal au couple « Cg » de glissement.

Lorsque le dispositif 42 d'accouplement magnétique est activé, les moyens 34 de freinage peuvent être désactivé.

Dans cette configuration, les moyens 22 de propulsion peuvent également être désactivés.

Comme représenté à la figure 5, lors du démarrage suivant, le dispositif 42 d'accouplement magnétique peut rester activé et le freinage par la machine électrique peut être réactivé afin de prélever de la puissance électrique ou pneumatique sur les moyens 22 de propulsion sans entrainer l'élément 14 tournant. Dans ce cas, on veillera à ce que le couple moteur transmis par les moyens 22 de propulsion au rotor 44 soit inférieur au couple « Cg » de glissement au rapport de transmission près

## Revendications

1. Turbomachine (10) pour un aéronef, comportant :
- un élément de structure (12) ;
- un élément (14) tournant à pales ou à aubes monté rotatif dans l'élément de structure (12) destiné à générer une poussée lors de sa rotation ;
- des moyens (22) de propulsion qui entraînent l'élément (14) tournant en rotation ;
- des moyens (34) de freinage de la rotation de l'élément (14) tournant formés par un moteur (36) électrique de freinage ; **caractérisée en ce que** la turbomachine comporte aussi :
- des moyens commandés d'immobilisation de l'élément (14) tournant par rapport à l'élément (12) de structure ; les moyens commandés d'immobilisation étant formés par un dispositif (42) d'accouplement magnétique qui est distinct du moteur (36) électrique de freinage et qui comporte :
- un rotor (44) qui est monté en rotation autour d'un axe (E) de rotation, qui est accouplé avec l'élément (14) tournant, et qui comporte des premiers éléments magnétiques (46) ;
- un stator (52) qui est monté fixe en rotation autour dudit axe (E) de rotation par rapport à l'élément (12) de structure, et qui comporte des deuxièmes éléments magnétiques (54) ;
le dispositif (42) d'accouplement magnétique étant commandé entre un état inactif dans lequel le rotor (44) est libre de tourner par rapport au stator (52) et un état actif dans lequel le rotor (44) est immobilisé en rotation par un couple résistant d'immobilisation produit par interaction magnétique entre les premiers éléments magnétiques (46) et les deuxièmes éléments magnétiques (54).

2. Turbomachine (10) selon la revendication précédente, **caractérisée en ce que** dans l'état actif, les premiers éléments magnétiques (46) sont séparés des deuxièmes éléments magnétiques (54) par un entrefer (e).

3. Turbomachine (10) selon la revendication précédente, **caractérisée en ce que** les premiers éléments magnétiques (46) du rotor (44) sont formés par des aimants permanents.

4. Turbomachine (10) selon l'une quelconque des revendications précédentes, **caractérisée en ce que** les deuxièmes éléments magnétiques (54) du stator (52) sont formés par des aimants permanents.

5. Turbomachine (10) selon l'une quelconque des revendications précédentes, **caractérisée en ce que** le stator (52) est monté coulissant par rapport au rotor (44) selon la direction de l'axe (E) de rotation entre :
- une position écartée, correspondant à son état inactif, dans laquelle les premiers éléments magnétiques (46) sont suffisamment écartés des deuxièmes éléments magnétiques (54) pour que couple résistant d'immobilisation soit sensiblement nul ; et
- une position rapprochée, correspondant à son état actif, dans laquelle les premiers éléments magnétiques (46) sont suffisamment proches pour que le couple résistant d'immobilisation immobilise l'élément (14) tournant par rapport à l'élément (12) de structure.

6. Turbomachine (10) selon l'une quelconque des revendications précédentes, **caractérisée en ce que** les premiers éléments magnétiques (46) sont agencés radialement en vis-à-vis des deuxièmes éléments magnétiques (54) lorsque le dispositif (42) d'accouplement magnétique est dans son état actif.

7. Turbomachine (10) selon la revendication précédente, **caractérisée en ce que** l'un parmi le stator (52) ou le rotor (44) est configuré pour être reçu concentriquement dans l'autre parmi le stator (52) ou le rotor (44) dans l'état actif du dispositif (42) d'accouplement magnétique avec réservation d'un entrefer (e) radial, les premiers éléments magnétiques (46) et les deuxièmes éléments magnétiques (54) étant chacun agencés en couronne autour de l'axe (E) de rotation, avec alternance de leur polarité.

8. Turbomachine (10) selon l'une quelconque des revendications 1 à 5, **caractérisée en ce que** les premiers éléments magnétiques (46) sont agencés axialement en vis-à-vis des deuxièmes éléments magnétiques (54) lorsque le dispositif (42) d'accouplement magnétique est dans son état actif.

9. Turbomachine (10) selon la revendication précédente, **caractérisée en ce que** le rotor (44) et le stator (52) présentent la forme de flasques se faisant face axialement, les premiers éléments magnétiques (46) et les deuxièmes éléments magnétiques (54) étant chacun agencés régulièrement autour de l'axe (E) de rotation dans la face (66, 68) faisant face à l'autre flasque.

10. Turbomachine (10) selon l'une quelconque des revendications précédentes, **caractérisée en ce que** le moteur (36) électrique de freinage forme un moyen de propulsion.

## Patentansprüche

1. Turbotriebwerk (10) für ein Luftfahrzeug, umfassend:
- ein Strukturelement (12);
- ein Drehelement (14) mit Flügeln oder Schaufeln, das drehbar in dem Strukturelement (12) montiert ist und dazu dient, bei seiner Drehung einen Schub zu erzeugen;
- Antriebsmittel (22), die das Drehelement (14) in Drehung versetzen;
- Mittel (34) zum Abbremsen der Drehung des Drehelements (14), die durch einen elektrischen Bremsmotor (36) gebildet wird; **dadurch gekennzeichnet, dass** das Turbotriebwerk weiter umfasst:
- gesteuerte Mittel zum Festsetzen des Drehelements (14) in Bezug auf das Strukturelement (12);
wobei die gesteuerten Festsetzmittel durch eine magnetische Kupplungsvorrichtung (42) gebildet werden, die von dem elektrischen Bremsmotor (36) verschieden ist und die Folgendes umfasst:
- einen Rotor (44), der um eine Drehachse (E) drehbar montiert ist, mit dem Drehelement (14) gekoppelt ist und der erste Magnetelemente (46) aufweist;
- einen Stator (52), der in Bezug auf das Strukturelement (12) um die Drehachse (E) drehfest montiert ist und der zweite Magnetelemente (54) aufweist;
wobei die magnetische Kupplungsvorrichtung (42) zwischen einem inaktiven Zustand, in dem sich der Rotor (44) relativ zum Stator (52) frei drehen kann, und einem aktiven Zustand gesteuert wird, in dem der Rotor (44) durch ein Festsetz-Gegenmoment, das durch magnetische Wechselwirkung zwischen den ersten Magnetelementen (46) und den zweiten Magnetelementen (54) erzeugt wird, festgesetzt ist.

2. Turbotriebwerk(10) nach dem vorstehenden Anspruch, **dadurch gekennzeichnet, dass** im aktiven Zustand die ersten Magnetelemente (46) durch einen Luftspalt (e) von den zweiten Magnetelementen (54) getrennt sind.

3. Turbotriebwerk (10) nach dem vorstehenden Anspruch, **dadurch gekennzeichnet, dass** die ersten Magnetelemente (46) des Rotors (44) durch Permanentmagneten gebildet werden.

4. Turbotriebwerk (10) nach einem der vorstehenden Ansprüche, **dadurch gekennzeichnet, dass** die zweiten Magnetelemente (54) des Stators (52) durch Permanentmagneten gebildet werden.

5. Turbotriebwerk (10) nach einem der vorstehenden Ansprüche, **dadurch gekennzeichnet, dass** der Stator (52) relativ zum Rotor (44) in Richtung der Drehachse (E) zwischen folgenden Positionen verschiebbar montiert ist:
- einer entfernten Position, die seinem inaktiven Zustand entspricht, in der die ersten Magnetelemente (46) ausreichend weit von den zweiten Magnetelementen (54) entfernt sind, damit das Festsetz-Gegenmoment im Wesentlichen null ist; und
- einer nahen Position, die seinem aktiven Zustand entspricht, in der die ersten Magnetelemente (46) ausreichend nahe sind, damit das Festsetz-Gegenmoment das Drehelement (14) relativ zum Strukturelement (12) festsetzt.

6. Turbotriebwerk (10) nach einem der vorstehenden Ansprüche, **dadurch gekennzeichnet, dass** die ersten Magnetelemente (46) radial gegenüber den zweiten Magnetelementen (54) angeordnet sind, wenn sich die magnetische Kupplungsvorrichtung (42) in ihrem aktiven Zustand befindet.

7. Turbotriebwerk (10) nach dem vorstehenden Anspruch, **dadurch gekennzeichnet, dass** einer von dem Stator (52) oder dem Rotor (44) so konfiguriert ist, dass er im aktiven Zustand der magnetischen Kupplungsvorrichtung (42) unter Beibehaltung eines radialen Luftspalts (e) konzentrisch in dem jeweils anderen von dem Stator (52) oder dem Rotor (44) aufgenommen wird, wobei die ersten Magnetelemente (46) und die zweiten Magnetelemente (54) jeweils ringförmig um die Drehachse (E) angeordnet sind, wobei sich ihre Polarität abwechselt.

8. Turbotriebwerk (10) nach einem der Ansprüche 1 bis 5, **dadurch gekennzeichnet, dass** die ersten Magnetelemente (46) axial gegenüber den zweiten Magnetelementen (54) angeordnet sind, wenn sich die magnetische Kupplungsvorrichtung (42) in ihrem aktiven Zustand befindet.

9. Turbotriebwerk (10) nach dem vorstehenden Anspruch, **dadurch gekennzeichnet, dass** der Rotor (44) und der Stator (52) die Form von axial einander gegenüberliegenden Flanschen aufweisen, wobei die ersten Magnetelemente (46) und die zweiten Magnetelemente (54) jeweils regelmäßig um die Drehachse (E) in der dem anderen Flansch zugewandten Fläche (66, 68) angeordnet sind.

10. Turbotriebwerk (10) nach einem der vorstehenden Ansprüche, **dadurch gekennzeichnet, dass** der elektrische Bremsmotor (36) ein Antriebsmittel bildet.

## Claims

1. A turbine engine (10) for an aircraft, comprising:
- a structural element (12);
- a rotating element (14) with blades or vanes rotatably mounted in the structural element (12) designed to generate thrust as it rotates;
- propulsion means (22) which drive the rotating element (14) in rotation;
- means (34) for braking the rotation of the rotating element (14) formed by an electric braking motor (36);
**characterized in that** the turbine engine also comprises:
- controlled means for immobilizing the rotating element (14) relative to the structural element (12); the controlled immobilization means being formed by a magnetic coupling device (42) which is separate from the electric braking motor (36) and which comprises:
- a rotor (44) which is mounted so as to rotate about an axis (E) of rotation, which is coupled to the rotating element (14), and which comprises first magnetic elements (46);
- a stator (52) which is mounted so as to be fixed in rotation about said axis (E) of rotation with respect to the structural element (12), and which comprises second magnetic elements (54);
the magnetic coupling device (42) being controlled between an inactive state in which the rotor (44) is free to rotate relative to the stator (52) and an active state in which the rotor (44) is immobilized in rotation by an immobilizing resistive torque produced by magnetic interaction between the first magnetic elements (46) and the second magnetic elements (54).

2. The turbine engine (10) according to the preceding claim, **characterized in that** in the active state, the first magnetic elements (46) are separated from the second magnetic elements (54) by an air gap (e).

3. The turbine engine (10) according to the preceding claim, **characterized in that** the first magnetic elements (46) of the rotor (44) are formed by permanent magnets.

4. The turbine engine (10) according to any one of the preceding claims, **characterized in that** the second magnetic elements (54) of the stator (52) are formed by permanent magnets.

5. The turbine engine (10) according to any one of the preceding claims, **characterized in that** the stator (52) is mounted so as to slide with respect to the rotor (44) in the direction of the axis (E) of rotation between:
- a spaced apart position, corresponding to its inactive state, wherein the first magnetic elements (46) are sufficiently separated from the second magnetic elements (54) for the resistive immobilization torque to be substantially zero; and
- a close position, corresponding to its active state, wherein the first magnetic elements (46) are sufficiently close for the immobilising resistive torque to immobilize the rotating element (14) relative to the structural element (12).

6. The turbine engine (10) according to any one of the preceding claims, **characterized in that** the first magnetic elements (46) are arranged radially opposite the second magnetic elements (54) when the magnetic coupling device (42) is in its active state.

7. The turbine engine (10) according to the preceding claim, **characterized in that** one of the stator (52) or the rotor (44) is configured to be received concentrically in the other of the stator (52) or the rotor (44) in the active state of the magnetic coupling device (42) with reservation of a radial air gap (e), the first magnetic elements (46) and the second magnetic elements (54) each being arranged in a ring gear around the axis (E) of rotation, with their polarity alternating.

8. The turbine engine (10) according to any one of claims 1 to 5, **characterized in that** the first magnetic elements (46) are arranged axially opposite the second magnetic elements (54) when the magnetic coupling device (42) is in its active state.

9. The turbine engine (10) according to the preceding claim, **characterized in that** the rotor (44) and the stator (52) have the form of axially facing flanges, the first magnetic elements (46) and the second magnetic elements (54) each being arranged regularly about the axis (E) of rotation in the face (66, 68) facing the other flange.

10. The turbine engine (10) according to any one of the preceding claims, **characterized in that** the electric braking motor (36) forms a propulsion means.
